# FASCICULE DE BREVET EUROPEEN

(11) **EP 0 433 186 B1**
(45) Date de publication et mention de la délivrance du brevet: **16.03.1994**
(21) Numéro de dépôt: 90420530.9
(22) Date de dépôt: 07.12.1990
(51) Int. Cl.: A01D 34/86, E01F 9/01

(54) **Faucheuse pour l'entretien des dépendances routières**
Mäher zum Unterhalten der Strassenränder
Mower for the maintenance of roadside verges

(30) Priorité: 11.12.1989 FR 8916582
(43) Date de publication de la demande: 19.06.1991
(73) Titulaire: ROUSSEAU (Société Anonyme), F-69250 Neuville-sur-Saône (FR)
(72) Inventeur: Rousseau, Claude, F-69250 Neuville-sur-Saone (FR)
(74) Mandataire: Schmitt, John

(56) Documents cités:
- EP-A- 0 341 064
- DE-A- 2 642 586
- FR-A- 2 304 722
- US-A- 2 292 785
- US-A- 2 518 187
- US-A- 3 535 861
- US-A- 4 306 406

## Description

La présente invention se rapporte à l'entretien au moyen de faucheuses des dépendances routières, notamment des accotements équipés de délinéateurs souples.

Actuellement, l'entretien des dépendances routières qui consiste à faucher l'herbe des accotements, nécessite la dépose des délinéateurs au moment du passage de l'outil de coupe, généralement un rotor à fléaux associé à un véhicule, puis la repose desdits délinéateurs après fauchage.

Cette intervention se traduit par un coût de main d'oeuvre supplémentaire. La sécurité peut être alors remise en cause, que ce soit celle des agents ou celle des usagers de la route qui risquent de ne plus percevoir momentannément les délinéateurs si ceux-ci sont reposés ultérieurement comme c'est souvent le cas.

Il est connu d'équiper les accotements de délinéateurs escamotables, c'est-à-dire susceptibles de se coucher sous l'action de la faucheuse et d'y demeurer pendant le passage de la machine, puis de se relever pour reprendre leur position initiale.

De tels délinéateurs flexibles réalisés tout ou en partie en matière souple, par exemple en matière plastique déformable, sont décrits dans le brevet EP-A-O 341 064.

L'invention consiste essentiellement à équiper les machines à faucher utilisées pour l'entretien des accotements équipés de délinéateurs souples, de moyens de poussée et de retenue du délinéateur et de munir le rouleau palpeur de vérins permettant la remontée du groupe de coupe pendant le passage sur le délinéateur, afin de ne pas lui faire supporter le poids de la faucheuse.

Quant à la machine à faucher, elle est munie de moyens de poussée et de retenue du délinéateur, tandis que le rouleau palpeur est équipé de vérins permettant la remontée du groupe de coupe pendant le passage sur le délinéateur, afin de ne pas lui faire supporter le poids de la faucheuse.

Suivant une caractéristique de l'invention, le moyen de poussée du délinéateur est une barre transversale susceptible d'osciller depuis une position de repos sur le capot du groupe de fauchage, jusqu'à une position située en avant dudit groupe et vice-versa, opérations réalisées manuellement ou automatiquement grâce à un vérin hydraulique équipé d'un moyen de commande des vérins actionnant le rouleau palpeur.

Suivant une autre caractéristique de l'invention, le moyen de retenue du délinéateur pendant le passage de la faucheuse, est un rouleau disposé derrière le rotor de coupe, mais en avant du rouleau palpeur, pour maintenir le délinéateur couché.

La manoeuvre automatique de la barre de poussée du délinéateur est réalisée par la commande de détecteurs optiques ou inductifs équipant la faucheuse et transmettant leurs ordres au vérin de la barre de poussée lorsqu'un délinéateur se trouve dans le champs visuel ou magnétique du détecteur.

Un exemple de réalisation de l'invention est décrit ci-après se référant aux dessins annexés sur lesquels:

Les figures 1 à 5 sont des vues schématiques de profil d'un groupe de fauchage travaillant sur un accotement pourvu de délinéateurs escamotables selon le procédé objet de l'invention.

La figure 6 est une vue en élévation du groupe de fauchage représenté pendant son passage sur un délinéateur.

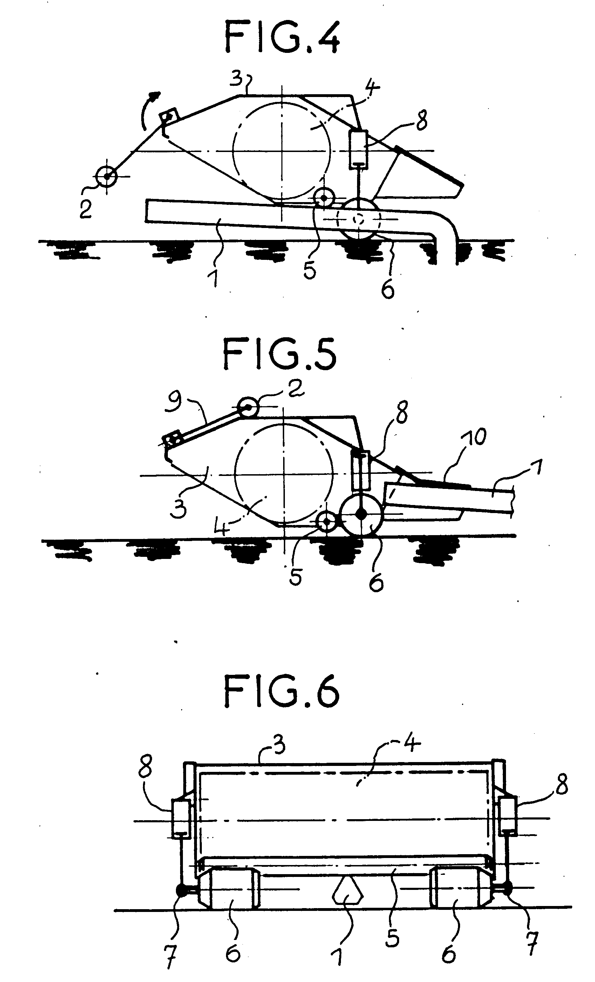

Sur les dessins, le repère 1 désigne le délinéateur escamotable fiché dans le sol. Le repère 2 désigne la barre de poussée oscillante qui équipe le capot 3 d'un groupe de fauchage connu du genre à rotor à fléaux 4. Le repère 5 indique le rouleau de retenue du délinéateur, dont les axes sont fixés aux flancs du capot 3. Ce rouleau est situé derrière le rotor 4, mais en avant du rouleau palpeur 6. Dans l'exemple représenté, le rouleau palpeur 6 est en deux parties comme c'est visible figure 6.

L'axe 7 de chaque fraction du rouleau palpeur 6 est associé à la tige d'un vérin hydraulique 8 rendu solidaire du capot 3. Les deux embouts du rouleau palpeur 6 sont donc manoeuvrés par les deux vérins 8.

La barre de poussée 2 affecte tout ou partie de la largeur du groupe de fauchage. Elle est accouplée à deux bras 9 articulés sur le capot 3.

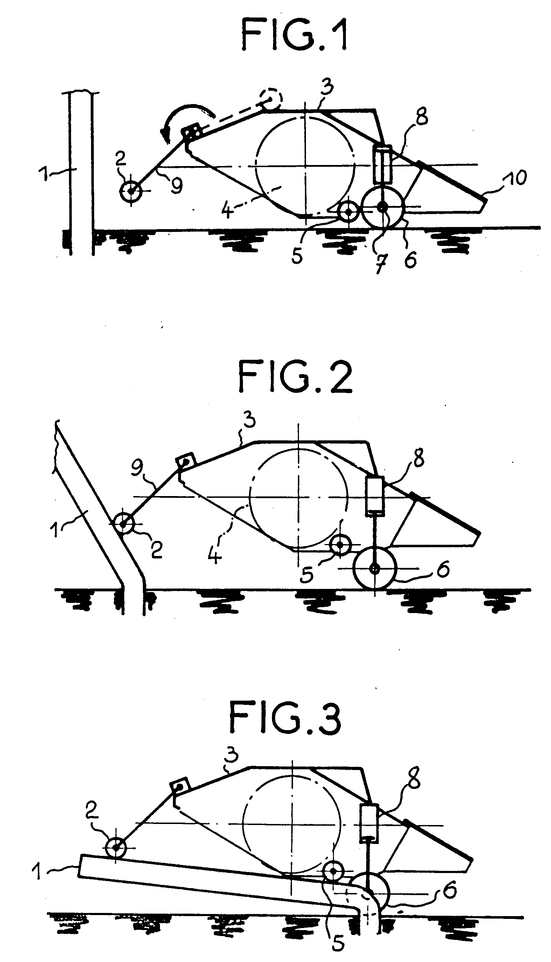

Un vérin hydraulique non représenté peut commander l'oscillation de la barre de poussée 2 comme c'est visible figure 1.

Le fonctionnement a lieu de la manière suivante:

Figure 1 - Manoeuvre de la barre 2, soit manuellement, soit automatiquement par détection d'une réflexion radar du délinéateur 1, soit par infrarouge, soit par détection lumineuse, soit par détection de proximité magnétique si, par exemple, une moquette contenant de la ferrite est déposée au pied du délinéateur.

Figure 2 - Début de flexion du délinéateur 1. On constate que le groupe de fauchage a été relevé par poussée des vérins sur le rouleau palpeur 6. Cette manoeuvre est réalisée par une soupape de séquence hydraulique alimentant les vérins 8 et commandée en fin de course du vérin actionnant la barre de poussée 2.

Figure 3 - Reprise du délinéateur 1 couché par le rouleau de retenue 5. Le délinéateur passe entre les deux parties du palpeur 6, comme c'est bien visible figure 6.

Figure 4 - Le Délinéateur 1 est toujours maintenu couché par le rouleau de retenue 5 jusqu'à dégagement de la zone d'évolution du rotor 4.

Figure 5 - relevage de la barre de poussée 2 manuellement ou automatiquement. Abaissement du groupe de fauchage par retour du rouleau palpeur 6 à sa position de la figure 1, grâce aux vérins 8. Le délinéateur 1 est libéré et pour éviter son relevage trop brutal, une bavette souple 10 équipe l'arrière du capot 3. Retour du délinéateur 1 à sa position verticale initiale.

Il va sans dire que toutes modifications de détails utiles peuvent être apportées à la réalisation du procédé sans pour autant déborder le cadre de l'invention. Par exemple, on peut envisager de supprimer le système de relevage du groupe de fauchage par les vérins 8, si le rotor est équipé de fléaux en matériau souple ne provoquant aucun dommage aux délinéateurs et, par ailleurs, permettant de couper l'herbe plus près du sol.

Par ailleurs, si la matière du délinéateur 1 permet de lui faire supporter des déformations importantes sans risque sous l'action du poids total de la machine à faucher, dans ce cas le rouleau palpeur 6 peut être réalisé en une seule partie.

## Revendications

1. Faucheuse du genre à rotor (4) à fléaux pour l'entretien des dépendances routières, notamment des accotements équipés de délinéateurs souples, caractérisée en ce qu'elle est munie de moyens (2,5) de poussée et de retenue du délinéateur (1) et de moyens (6-8) de relevage du groupe de coupe (4) pendant son passage sur le délinéateur couché pour qu'il ne supporte pas le poids de la faucheuse.

2. Faucheuse selon la revendication 1, caractérisée par le fait qu'elle est équipée d'une barre transversale (2) susceptible d'osciller depuis une position de repos sur le capot (3) du groupe de coupe jusqu'à une position de poussée située en avant dudit groupe et vice-versa.

3. Faucheuse selon la revendication 1, caractérisée par le fait qu'elle est équipée d'un rouleau de retenue (5) disposé derrière le rotor (4), mais en avant du rouleau palpeur (6) de la machine.

4. Faucheuse selon les revendications 1 et 3, caractérisée par le fait que le rouleau palpeur est fractionné en deux parties (6) chacune accouplée à un vérin hydraulique de poussée (8) associé au capot (3) du groupe de coupe.

5. Faucheuse selon la revendication 2, caractérisée par le fait que la barre de poussée (2) est manoeuvrée par un vérin hydraulique.

6. Faucheuse selon les revendications 1 et 4, caractéririsée par le fait que les vérins (8) de poussée du rouleau palpeur (6) pour relever le groupe de coupe sont commandés par une soupape de séquence hydraulique asservie au vérin de manoeuvre de la barre (2).

7. Faucheuse suivant la revendication 2, caractérisée par le fait que la manoeuvre de la barre (2) est commandée par des détecteurs optiques ou inductifs déclenchés par les délinéateurs.

8. Faucheuse suivant la revendication 3, caractérisée par le fait que le rouleau palpeur (6) est en une seule partie, si la matière du délinéateur (1) est susceptible de se déformer.

## Patentansprüche

1. Mähhächselmaschine mit Waagebalkenrotor (4) für Wartungsarbeiten an Straßenseitenrändern, insbesondere Böschungen mit elastischen Straßenrandmarkierungspfosten, dadurch gekennzeichnet, daß sie Mittel (2, 5) zum zurückschieben und festhalten der Straßenrandmarkierungepfosten (1) und Mittel (6-8) zum Anheben des Schneid-aggregates (4) während des Überfahrens des flachgelegten Straßenrandmarkierungspfostens (1) besitzt, um diesen nicht mit dem Gewicht der Maschinen zu belasten.

2. Mähhächselmaschine nach patentanspruch 1, dadurch gekennzeichnet, daß sie mit einer Querstange (2) ausgerüstet ist, die aus einer Ruhestellung auf der Abdeckhaube (3) des Schneidaggregates in eine Schubposition vor dem Aggregat und zurück verlagert werden kann.

3. Mähhächselmaschine nach Patentanspruch 1, dadurch gekennzeichnet, daß sie mit einer Festhalterolle (5) hinter dem Rotor (4) aber vor der Abtastrolle (6) der Maschine ausgerüstet ist.

4. Mähhächselmaschine nach Patentanspruch 1 und 3, dadurch gekennzeichnet, daß die Abtastrolle aus zwei Teilen (6) besteht, von denen jeder mit einem Schub-Druckzylinder (8) verbunden ist, der wiederum mit der Abdeckhaube (3) des Schneidaggregates verbunden ist.

5. Mähhächselmaschine nach Patentanspruch 2, dadurch gekennzeichnet, daß die Schubstange (2) über einen Druckzylinder gesteuert ist.

6. Mähhächselmaschine nach Patentanspruch 1 und 4, dadurch gekennzeichnet, daß die Schub-Druckzylinder (8) der Abtastrolle (6) zum Anheben des Schneidaggregates über ein hydraulisches Folgeventil gesteuert sind, das dem Druck-zylinder zur Steuerung der Schubstange (2) nachgesteuert ist.

7. Mähhächselmaschine nach Patentanspruch 2, dadurch gekennzeichnet, daß die Steuerung der Schubstange (2) durch optische oder induktive Detektoren erfolgt, die durch die Straßenrandmarkierungspfosten ausgelöst werden.

8. Mähhächselmaschine nach Patentanspruch 3, dadurch gekennzeichnet, daß die Abtastrolle (6) einteilig ist, wenn das Material des Straßenrandmarkierungspfostens (1) verformbar ist.

## Claims

1. Rotory lawn mower (4) with balance arms for upkeeping road outbuildings, especially road verges equipped with flexible delineators, wherein it is fitted with means (2, 5) for moving and carrying the delineator (1) and means (6-8) for lifting up the cutting unit (4) during its movement onto the laid down delineator so that it does not support the weight of the mower.

2. Mower according to claim 1, wherein it is equipped with a transverse bar (2) able to oscillate from an idle position on the covering cap (3) of the cutting unit as far as a thrust position situated upstream of said unit and vice versa.

3. Mower according to claim 1, wherein it is equipped with a retaining roller (5) disposed behind the rotor (4) but upstream of the sensor roller (6) of the machine.

4. Mower according to claims 1 and 3, wherein the sensor roller is split into two portions (6) each coupled to a hydraulic thrustor jack (8) associated with the covering cap (3) of the cutting unit.

5. Mower according to claim 2, wherein the thrust bar (2) is manoeuvered by a hydraulic jack.

6. Mower according to claims 1 and 4, wherein the thrust jacks of the sensor roller (6) for lifting up the cutting unit are controlled by a hydraulic sequence valve associated with the jack (2) for controlling the bar.

7. Mower according to claim 2, wherein the manoeuvering of the bar (2) is controlled by the optical or inductive detectors triggered by the delineators.

8. Mower according to claim 3, wherein the sensor roller (6) is formed of a single porion if the material of the delineator (1) is likely to warp.
